(19) Europäisches Patentamt
European Patent Office
Office européen des brevets

(11) **EP 4 618 529 A1**

(12) **EUROPEAN PATENT APPLICATION**
published in accordance with Art. 153(4) EPC

(43) Date of publication:
**17.09.2025 Bulletin 2025/38**

(21) Application number: **23899505.4**

(22) Date of filing: **04.09.2023**

(51) International Patent Classification (IPC):
***H04N 5/57*** *(2006.01)*

(52) Cooperative Patent Classification (CPC):
**H04N 5/57; H04N 19/42; H04N 23/741; H04N 23/84**

(86) International application number:
**PCT/CN2023/116769**

(87) International publication number:
**WO 2024/119922 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2022 CN 202211585804**

(71) Applicant: **Honor Device Co., Ltd.
Shenzhen, Guangdong 518040 (CN)**

(72) Inventors:
- **DING, Yue
  Shenzhen, Guangdong 518040 (CN)**
- **HU, Zhicheng
  Shenzhen, Guangdong 518040 (CN)**
- **ZHANG, Jiasen
  Shenzhen, Guangdong 518040 (CN)**
- **YANG, Qingliang
  Shenzhen, Guangdong 518040 (CN)**

(74) Representative: **Gill Jennings & Every LLP
The Broadgate Tower
20 Primrose Street
London EC2A 2ES (GB)**

(54) **VIDEO PROCESSING METHOD, DISPLAY DEVICE AND STORAGE MEDIUM**

(57)     This application provides a video processing method, a display device, and a storage medium, and relates to the technical field of image processing. The method includes: obtaining a decoded video of an original video; determining luminance information corresponding to each video frame image; obtaining a brightness capability of the display device and a dynamic range of the original video, and calculating an extensible dynamic range of each video frame image based on the brightness capability of the display device and the dynamic range of the original video; and performing tone mapping on each video frame image by using the luminance information corresponding to each video frame image and the extensible dynamic range of each video frame image, to obtain an enhanced image corresponding to each video frame image. When the extensible dynamic range of each video frame image is determined, the brightness capability of the display device and the dynamic range of the original video are fully considered, and then tone mapping is performed on each video frame image by using the extensible dynamic range, so that the dynamic range of the video frame image is actually extended.

FIG. 5

```
Obtain a decoded video of an original video ──── S101
                    ↓
Determine luminance information corresponding to each video frame image ──── S102
                    ↓
Obtain a brightness capability of a display device and a dynamic range of the
original video and calculate an extensible dynamic range of each video frame
image based on the brightness capability of the display device and the
dynamic range of the original video ──── S103
                    ↓
Perform tone mapping on each video frame image by using the luminance
information corresponding to each video frame image and the extensible
dynamic range of each video frame image, to obtain an enhanced image
corresponding to each video frame image ──── S104
```

EP 4 618 529 A1

## Description

This application claims priority to Chinese Patent Application No. 202211585804.3, filed with the China National Intellectual Property Administration on December 09, 2022 and entitled "VIDEO PROCESSING METHOD, DISPLAY DEVICE, AND STORAGE MEDIUM", which is incorporated herein by reference in its entirety.

## TECHNICAL FIELD

This application relates to the technical field of image processing, and in particular, to a video processing method, a display device, and a storage medium.

## BACKGROUND

Compared with a standard dynamic range (Standard Dynamic Range, SDR) video, a high-dynamic range (High-Dynamic Range, HDR) video has clearer images in light and dark levels, has richer image details, and can reproduce a real scene more realistically. This provides users with better video viewing effect.

With the development of an HDR technology, to play the HDR video in a better manner, a brightness capability of a display device is increasing. A dynamic range of the display device is usually used to represent the brightness capability of the display device. The higher the dynamic range of the display device is, the stronger the brightness capability of the display device is.

In the course of video technology development, a large quantity of SDR videos have been accumulated, but with an increasing quantity of display devices with strong brightness capabilities, these SDR videos have poor display effect on the display devices with strong brightness capabilities.

## SUMMARY

This application provides a video processing method, a display device, and a storage medium. An actually extensible dynamic range is determined by determining luminance information of an original video and with reference to a brightness capability of a current display device, and tone mapping is performed based on the extensible dynamic range, so that the dynamic range is actually extended.

According to a first aspect, this application provides a video processing method, where the method is applied to a display device and includes:

obtaining a decoded video of an original video, where the decoded video includes a plurality of video frame images; determining luminance information corresponding to each video frame image; obtaining a brightness capability of the display device and a dynamic range of the original video, and calculating an extensible dynamic range of each video frame image based on the brightness capability of the display device and the dynamic range of the original video; and performing tone mapping on each video frame image by using the luminance information corresponding to each video frame image and the extensible dynamic range of each video frame image, to obtain an enhanced image corresponding to each video frame image, where a dynamic range of the enhanced image is greater than the dynamic range of the video frame image.

Optionally, the display device provided in the embodiments of this application may include a mobile phone, a tablet computer, a wearable device, a television, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), various camera apparatuses, and the like, or may be another device or apparatus capable of image processing. A specific type of the display device is not limited in the embodiments of this application.

Optionally, the original video may include an SDR video. The SDR video may be an online video played on a display device.

According to the video processing method provided in the first aspect, when the extensible dynamic range of each video frame image is determined, the brightness capability of the display device and the dynamic range of the original video are fully considered, and then tone mapping is performed on each video frame image by using the extensible dynamic range, so that the dynamic range of the video frame image is actually extended, that is, the enhanced image is an image with an extended dynamic range. Therefore, a dynamic range of a video including a plurality of enhanced images is also extended, so that when the video with the extended dynamic range is displayed on the display device, display effect and user experience are improved.

In a possible implementation, the video processing method provided in this application may further include generating an enhanced video based on a plurality of enhanced images. The enhanced video is a video with an extended dynamic range, that is, the enhanced video is a video for which a dynamic range is extended. An enhanced image corresponding to each video frame image is arranged in time sequence to obtain an enhanced video, and the enhanced video may be played on the display device. In this implementation, after a video frame image is processed, an enhanced image corresponding to the video frame image is displayed on the display device. Because a processing speed of the display device is very fast, the user may watch a video smoothly, and the video is a video with an extended dynamic range, which improves user experience.

Optionally, in a possible implementation, the luminance information may include a luminance value, and the determining luminance information corresponding to each video frame image includes:

determining a pixel format of each video frame image; obtaining a Y value of each video frame image when the pixel format is a YUV format; or calculating a luminance value of each video frame image by using a preset formula when the pixel format is an RGB format, where the Y value represents the luminance value.

Optionally, in another possible implementation, the luminance information may include a luma histogram, and the determining luminance information corresponding to each video frame image includes: generating a luma histogram of each video frame image.

In a possible implementation, the performing tone mapping on each video frame image by using the luminance information corresponding to each video frame image and the extensible dynamic range of each video frame image, to obtain an enhanced image corresponding to each video frame image includes: determining a standard dynamic region and an extended dynamic region corresponding to each video frame image by using the luminance information corresponding to each video frame image; determining, based on the extensible dynamic range of each video frame image, a first coefficient corresponding to the standard dynamic region of each video frame image and a second coefficient corresponding to the extended dynamic region of each video frame image; and performing tone mapping on the pixel in the standard dynamic region based on the first coefficient, and performing tone mapping on the pixel in the extended dynamic region based on the second coefficient, to obtain the enhanced image corresponding to each video frame image.

Optionally, the standard dynamic region includes several pixels in the video frame image, and the standard dynamic region also includes several pixels in the video frame image. Luminance information of a pixel in the standard dynamic region is less than a preset threshold, and luminance information of a pixel in the extended dynamic region is greater than or equal to the preset threshold.

Optionally, the preset threshold may be set by the user, may be calculated by using a gray scale ratio, and may also be determined by using a machine learning model.

Optionally, the first coefficient is less than the second coefficient.

In this implementation, an adjustable region, namely, the standard dynamic region and the extended dynamic region, in each video frame image is determined by using the luminance information corresponding to each video frame image; and different coefficients are determined for the standard dynamic region and the extended dynamic region, and pixel values of pixels in different regions (such as the standard dynamic region and the extended dynamic region) are adjusted based on different coefficients (such as the first coefficient and the second coefficient), so that a dynamic range of a finally generated enhanced image can be actually extended. Then, a dynamic range of a video including a plurality of enhanced images is also extended, so that when the video with the extended dynamic range is displayed on the display device, display effect and user experience are improved.

In a possible implementation, the performing tone mapping on the pixel in the standard dynamic region based on the first coefficient, and performing tone mapping on the pixel in the extended dynamic region based on the second coefficient, to obtain the enhanced image corresponding to each video frame image includes: calculating a first product of an original pixel value of each pixel in the standard dynamic region and the first coefficient, and updating a pixel value of each pixel in the standard dynamic region based on the first product; calculating a second product of an original pixel value of each pixel in the extended dynamic region and the second coefficient, and updating a pixel value of each pixel in the extended dynamic region based on the second product; and generating, based on each updated pixel in the standard dynamic region and each updated pixel in the extended dynamic region, the enhanced image corresponding to each video frame image.

In this implementation, pixel values of pixels in different regions (such as the standard dynamic region and the extended dynamic region) are adjusted based on different coefficients (such as the first coefficient and the second coefficient). When the first coefficient is less than the second coefficient, and the second coefficient is 1, the pixel value of the pixel in the extended dynamic region is maintained, and the pixel value of the pixel in the standard dynamic region is reduced, so that a dynamic range of a finally generated enhanced image can be actually extended. Alternatively, when the first coefficient is less than the second coefficient, and the first coefficient is 1, the pixel value of the pixel in the standard dynamic region is maintained, and the pixel value of the pixel in the extended dynamic region is increased, so that a dynamic range of a finally generated enhanced image can be actually extended.

In a possible implementation, the performing tone mapping on each video frame image by using the luminance information corresponding to each video frame image and the extensible dynamic range of each video frame image, to obtain an enhanced image corresponding to each video frame image includes: determining, by using the luminance information corresponding to each video frame image, a low gray scale region, a medium gray scale region, and a high gray scale region corresponding to each video frame image; and adjusting, based on the extensible dynamic range of each video frame image, luminance of at least one of the low gray scale region, the medium gray scale region, and the high gray scale region, to obtain the enhanced image corresponding to each video frame image.

For example, current luminance of the low gray scale region and the medium gray scale region is maintained, and luminance of the high gray scale region is increased. For another example, current luminance of the medium gray scale region and the high gray scale region is maintained, and luminance of the low gray scale region is reduced.

Optionally, if the luminance information corresponding to each video frame image is determined by using a luma histogram, a luma histogram of each video frame image may be divided by using T1 and T2, to obtain a low gray scale region, a medium gray scale region, and a high gray scale region. Values of T1 and T2 may be set by the user, may be set based on a proportion of luminance gray scale distribution, or may be determined by using a machine learning model.

In this implementation, an adjustable region, namely, a low gray scale region, a medium gray scale region, and a high gray scale region, in each video frame image is determined by using the luminance information corresponding to each video frame image; and luminance of at least one of the low gray scale region, the medium gray scale region, and the high gray scale region is adjusted based on the extensible dynamic range of each video frame image. For example, current luminance of the low gray scale region and the medium gray scale region is maintained, and luminance of the high gray scale region is increased. For another example, current luminance of the medium gray scale region and the high gray scale region is maintained, and luminance of the low gray scale region is reduced. In this way, a dynamic range of a finally generated enhanced image can be actually extended.

In a possible implementation, the adjusting, based on the extensible dynamic range of each video frame image, luminance of at least one of the low gray scale region, the medium gray scale region, and the high gray scale region, to obtain the enhanced image corresponding to each video frame image includes: based on the extensible dynamic range of each video frame image, determining an adjusted gray scale value of a pixel in the low gray scale region; determining an adjusted gray scale value of a pixel in the medium gray scale region; determining an adjusted gray scale value of a pixel in the high gray scale region; and generating the enhanced image corresponding to each video frame image based on the adjusted gray scale value of each pixel in the low gray scale region, the medium gray scale region, and the high gray scale region.

In this implementation, an adjustable region, namely, a low gray scale region, a medium gray scale region, and a high gray scale region, in each video frame image is determined by using the luminance information corresponding to each video frame image; and the adjusted gray scale value of each pixel in the low gray scale region, the medium gray scale region, and the high gray scale region is determined based on the extensible dynamic range of each video frame image, to generate the enhanced image corresponding to each video frame image. Because an adjusted gray scale value of each pixel in each region is determined based on the extensible dynamic range of each video frame image, the adjusted gray scale value of each pixel is adjusted to different degrees. In this way, a dynamic range of a finally generated enhanced image can be actually extended.

In a possible implementation, based on the extensible dynamic range of each video frame image, the determining an adjusted gray scale value of a pixel in the low gray scale region includes: determining, based on the extensible dynamic range of each video frame image, a third coefficient corresponding to the low gray scale region; and performing tone mapping on the pixel in the low gray scale region based on the third coefficient, to obtain the adjusted gray scale value of the pixel in the low gray scale region.

Optionally, the third coefficient may be determined based on the dynamic range of the original video and the extensible dynamic range of each video frame image.

Optionally, an adjusted gray scale value of each pixel in the low gray scale region and a gray scale value before adjustment may satisfy the following relationship: $y_1 = (A/B)*k*x_1$, where $x_1$ represents a gray scale value of a pixel in the low gray scale region before adjustment, $y_1$ represents an adjusted gray scale value of the pixel in the low gray scale region, $A/B$ represents the third coefficient, $A$ represents the dynamic range of the original video, $B$ represents the extensible dynamic range of each video frame image, and $k$ represents a constant.

Alternatively, an adjusted gray scale value of each pixel in the low gray scale region and a gray scale value before adjustment may satisfy the following relationship:
$y_1 = M*(A/B)*k*x_1$, $(M>1)$, where $x_1$ represents a gray scale value of a pixel in the low gray scale region before adjustment, $y_1$ represents an adjusted gray scale value of the pixel in the low gray scale region, $M*(A/B)$ represents the third coefficient, $A$ represents the dynamic range of the original video, $B$ represents the extensible dynamic range of each video frame image, and $M$ and $k$ represent constants.

Optionally, an adjusted gray scale value of each pixel in the medium gray scale region and a gray scale value before adjustment may satisfy the following relationship:
$y_2 = k1*x_2 + b1$, where $x_2$ represents a gray scale value of a pixel in the medium gray scale region before adjustment, $y_2$ represents an adjusted gray scale value of the pixel in the medium gray scale region, and $k1$ and $b1$ represent constants. Values of $k1$ and $b1$ may be set based on a proportion of luminance gray scale distribution, or may be determined by using a machine learning model.

Optionally, an adjusted gray scale value of each pixel in the high gray scale region and a gray scale value before adjustment may satisfy the following relationship:
$y_3 = k2*x_3 + b2$, where $x_3$ represents a gray scale value of a pixel in the high gray scale region before adjustment, $y_3$ represents an adjusted gray scale value of the pixel in the high gray scale region, and $k2$ and $b2$ represent constants. Values of *k2* and *b2* may be set based on a proportion of luminance gray scale distribution, or may be determined by using a machine learning model.

In this implementation, the adjusted gray scale value of each pixel in the low gray scale region, the medium gray scale region, and the high gray scale region is determined based on the extensible dynamic range of each video frame image, to finally generate the enhanced image corresponding to each video frame image. Because an adjusted gray scale value of each pixel in each region is determined based on the extensible dynamic range of each video frame image, the adjusted gray scale value of each pixel is adjusted to different degrees. In this way, a dynamic range of a finally generated enhanced image can be actually extended.

According to a second aspect, this application provides a display apparatus. The display apparatus is included in a display device, and the display apparatus has a function of implementing behaviors of the display device in the first aspect and the possible implementations in the first aspect. The function may be implemented by using hardware, or may be implemented by hardware executing corresponding software. The hardware or the software includes one or more modules or units corresponding to the function, for example, a first obtaining module or unit, a determining module or unit, a second obtaining module or unit, a processing module or unit, and the like.

According to a third aspect, this application provides a display device, where the display device includes: a processor, a memory, and an interface, where the processor, the memory, and the interface cooperate with each other, so that the display device performs any method in the technical solution provided in the first aspect.

According to a fourth aspect, this application provides a chip, including a processor. The processor is configured to read and execute a computer program stored in a memory, to perform the method according to the first aspect and any possible implementation of the first aspect.

Optionally, the chip further includes a memory, where the memory is connected to the processor through a circuit or a wire.

Optionally, the chip further includes a communication interface.

According to a fifth aspect, this application provides a computer-readable storage medium, the computer-readable storage medium stores a computer program, and the computer program, when executed by a processor, enables the processor to perform any method in the technical solution according to the first aspect.

According to a sixth aspect, a computer program product is provided, where the computer program product includes: computer program code, where the computer program code, when runs on a display device, enables the display device to perform any method in the technical solution according to the first aspect.

## BRIEF DESCRIPTION OF DRAWINGS

FIG. 1 is one frame of image of playing an SDR video on a display device in the related art according to an example embodiment of this application;
FIG. 2 is one frame of image of playing a processed SDR video on a display device according to an example embodiment of this application;
FIG. 3 is a schematic diagram of an application scenario according to an embodiment of this application;
FIG. 4 is a schematic diagram of an enhanced image in another application scenario according to an embodiment of this application;
FIG. 5 is a schematic flowchart of a video processing method according to an embodiment of this application;
FIG. 6 is a display diagram of luminance information according to an embodiment of this application;
FIG. 7 is a display diagram of another luminance information according to an embodiment of this application;
FIG. 8 is a schematic flowchart of generating an enhanced image corresponding to a video frame image according to an embodiment of this application;
FIG. 9 is another schematic flowchart of generating an enhanced image corresponding to a video frame image according to an embodiment of this application;
FIG. 10 is a schematic diagram of region division according to an embodiment of this application;
FIG. 11 is a schematic diagram of luminance region division according to an embodiment of this application;
FIG. 12 is a schematic diagram of tone mapping according to an embodiment of this application;
FIG. 13 is a schematic diagram of an implementation process according to an example embodiment of this application;
FIG. 14 is a schematic diagram of a structure of a display device according to an embodiment of this application;
FIG. 15 is a schematic diagram of a structure of a display apparatus according to an embodiment of this application; and
FIG. 16 is a schematic diagram of a structure of a chip according to an embodiment of this application.

## DESCRIPTION OF EMBODIMENTS

The following describes technical solutions of this application with reference to the accompanying drawings.

In the descriptions of the embodiments of this application, "/" means "or" unless otherwise specified.

For example, A/B may represent A or B. In this specification, "and/or" describes only an association relationship for describing associated objects and indicates that three relationships may exist. For example, A and/or B may represent the following three cases: Only A exists, both A and B exist, and only B exists. In addition, in the descriptions of the embodiments of this application, "a plurality of" represents two or more.

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more of the features. In descriptions of embodiments of this embodiment, unless otherwise stated, "a plurality of" means two or more.

Reference to "one embodiment" or "some embodiments" described in this specification means that a specific characteristic, structure or feature described in combination with this embodiment is included in one or more embodiments of this application. Therefore, the statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "comprise", "have" and their variations mean "including but not limited to", unless otherwise specially emphasized in other ways.

Some wordings in the embodiments of this application are first explained below for easy understanding of a person skilled in the art.

1. Dynamic range (Dynamic Range)

In the field of image processing, the dynamic range refers to a ratio of brightest luminance to darkest luminance on an image, and the dynamic range is one of important dimensions for image quality evaluation.

A dynamic range of a natural scene is relatively large, usually reaching a magnitude of 10 raised to the power of 9, and a dynamic range of human eyes is also very wide, which is generally considered to be a magnitude of at least 10 raised to the power of 6. However, because 8-bit integer data is usually used to record a pixel value of an image, traditional image and video content can be distinguished only in 256 different luminance levels. When displayed on an ordinary display, a luminance dynamic range is about a magnitude of 10 raised to the power of 3.

Therefore, from the perspective of dynamic range, there is a big gap between traditional images and videos and real scenes as seen by human eyes, which limits richness of video content. This is also an important reason why traditional images and videos always look different from the real world.

2. High-dynamic range (High-Dynamic Range, HDR) video

HDR is also referred to as "high-dynamic-range rendering", and the significance of HDR is to make a display picture closer to the real world observed by human eyes. It is known that a video is actually an image sequence including static pictures. Compared with an ordinary image, a high-dynamic range image (High-Dynamic Range Image, HDRI) may provide more dynamic ranges and image details. Based on low-dynamic range (Low-Dynamic Range, LDR) images with different exposure times, a final HDR image is synthesized by using each LDR image with an exposure time corresponding to the best detail. This can better reflect visual effect in a real environment. An HDR video includes frames of the HDRI, so the HDR video is more vivid and textured than an ordinary video.

3. Standard dynamic range (Standard Dynamic Range, SDR)

SDR is a traditional technology for processing luminance and color values in images and is a common color display method. Generally, a traditional video is referred to as an SDR video. To show an original scene in a limited luminance range, a luminance range of a natural scene may be compressed seriously in the SDR video, resulting in an obvious lack of contrast of video content.

4. RGB (Red, Green, Blue) color space

Also known as an RGB domain, refer to a color model related to a structure of a human visual system. Based on a structure of human eyes, all colors are regarded as different combinations of red, green, and blue.

5. Pixel value

Refer to a set of color components corresponding to each pixel in a color image located in an RGB color space. For example, each pixel corresponds to a set of tricolor components. The tricolor components are a red component R, a green component G, and a blue component B.

6. YUV color space

Also known as a YUV domain, refer to a color coding method. Y stands for luminance (Luminance or Luma), and U and V stand for chrominance (Chrominance or Chroma). The RGB color space focuses on perception of human eyes to color, while the YUV color space focuses on sensitivity of vision to brightness, and the RGB color space and the YUV color space may be converted to each other.

7. Luminance

Luminance is a luminous flux emitted by a light source unit in a given direction, a unit area, and a unit solid angle, where a symbol of luminance is L, and a unit of luminance is nit.

8. Gray scale

Generally, every point on a liquid crystal display, that is, a pixel, includes three sub-pixels: red, green, and blue (RGB). A light source behind each sub-pixel may show different luminance levels, and gray scales represent different levels of brightness from the darkest to the brightest. More levels indicate more delicate picture effect that can be presented. For example, a screen can usually show 256 luminance layers, which are referred to as 256 gray scales.

9. Tone mapping

Tone mapping is a computer graphics technology that approximately displays high-dynamic range images on limited dynamic range media.

10. Luma histogram (Luma histogram)

The luma histogram is a quantization tool used to detect luminance of pictures. Generally, luminance information of an image is divided into 0 to 255, a horizontal axis of the luma histogram represents luminance (luminance values) from 0 to 255, and a vertical axis represents a quantity of pixels of corresponding luminance in the image. The leftmost part of the horizontal axis is 0, and the rightmost part is 255. 0 represents the darkest part, and 255 represents the brightest part. The middle value represents gray with different luminance. A larger value indicates brighter.

The above is a brief introduction to the terms involved in the embodiments of this application, and details are not described in the following.

Compared with a standard dynamic range (Standard Dynamic Range, SDR) video, a high-dynamic range (High-Dynamic Range, HDR) video has clearer images in light and dark levels, has richer image details, and can reproduce a real scene more realistically. In other words, in the HDR video, video content may be displayed in a higher dynamic range, thereby providing users with better video viewing effect.

With the development of an HDR technology, to play the HDR video in a better manner, a brightness capability of a display device is increasing. A dynamic range of the display device is usually used to represent the brightness capability of the display device. For example, the higher the dynamic range of the display device is, the stronger the brightness capability of the display device is.

There are more and more display devices with strong brightness capabilities, but in the course of video technology development, a large quantity of SDR videos have been accumulated, that is, a current mainstream video is still the SDR video (or a dynamic range of the current mainstream video is still SDR). As a result, these SDR videos cannot reproduce real scenes realistically on the display device with strong brightness capability, and cannot display video content in a dynamic range higher than the SDR, which leads to poor display effect of these SDR videos on the display device with strong brightness capability.

In addition, for a display device with strong brightness capability, a dynamic range of the display device has exceeded the dynamic range of the SDR video. The brightness capability of the display device cannot be fully used when the display device is used to display the SDR video, resulting in a waste of display resources. For example, the SDR video is usually stored in a data width of 8 bits (binary digit, bit), which can express a dynamic range of about 100 nits (nit). For a display device with strong brightness capability, a dynamic range that the display device can express may be above 1000 nits. Therefore, a brightness capability of the display device cannot be fully used when the display device is used to display the SDR video, resulting in a waste of display resources.

In the related art, contrast of the SDR video is sometimes increased by increasing color contrast of a video frame, but this still cannot extend the dynamic range of the SDR video, so the above problem still exists. Therefore, an embodiment of this application provides a video processing method. In the video processing method, an actually extensible dynamic range of the SDR video is determined by determining luminance information of the SDR video and with reference to a brightness capability of a current display device, and tone mapping is performed on the SDR video based on the extensible dynamic range, so that the dynamic range of the SDR video is actually extended. In this way, display effect is improved when the SDR video with an extended dynamic range is displayed on the display device.

At present, using display devices to play videos has become a daily behavior in lives of people. For example, the display device is a mobile phone. A brightness capability of the mobile phone is getting higher and higher, so the HDR video can be played in a better manner. However, a current mainstream video is still the SDR video. These SDR videos cannot reproduce real scenes realistically on the display device with strong brightness capability, and cannot display video content in a dynamic range higher than the SDR, which leads to poor display effect of these SDR videos on the display device with strong brightness capability.

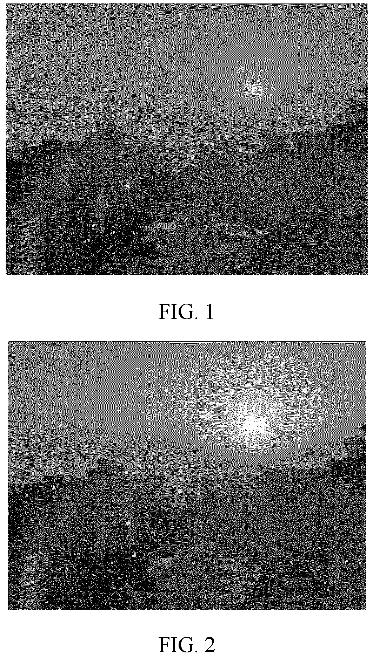

Refer to FIG. 1. FIG. 1 is one frame of image of playing an SDR video on a display device in the related art according to an example embodiment of this application.

As shown in FIG. 1, when the SDR video is played on the display device, the frame of image has low luminance and a low-dynamic range, and cannot reproduce a real scene realistically, resulting in poor display effect.

However, through the video processing method provided in the embodiments of this application, for example, an actually extensible dynamic range of the SDR video is determined by determining luminance information of the SDR video and with reference to a brightness capability of a current display device (for example, a mobile phone), and tone mapping is performed on the SDR video based on the extensible dynamic range, so that the dynamic range of the SDR video can be actually extended. In this way, display effect is improved when the SDR video with an extended dynamic range is displayed on the display device (for example, a mobile phone).

Refer to FIG. 2. FIG. 2 is one frame of image of playing a processed SDR video on a display device according to an example embodiment of this application.

As shown in FIG. 2, when the processed/enhanced SDR video is played on the display device, the luminance and dynamic range of this frame of image are significantly extended compared with the image in FIG. 1. This can reproduce the real scene realistically and improve the display effect.

Firstly, application scenarios of the embodiments of this application are briefly described.

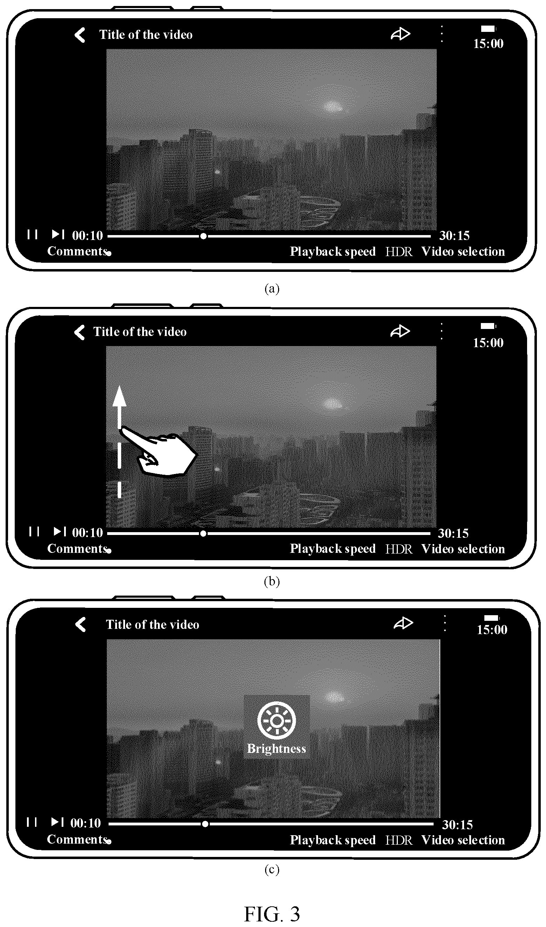

Refer to FIG. 3. FIG. 3 is a schematic diagram of an application scenario according to an embodiment of this application. The video processing method provided in this application may be used to extend a dynamic range of an SDR video.

In an example, that a display device is a mobile phone is used for description. When the display device detects an operation that a user taps an icon of a video application on an application interface, the video application may be started, and a video application interface is displayed. The user may tap a favorite video in the video application interface and select a full-screen play mode. In this case, the display device displays a graphical user interface (graphical user interface, GUI) as shown in (a) of FIG. 3, where the GUI may be referred to as a video play interface.

As shown in (b) of FIG. 3, in the video play interface, the user may lightly press the left side of the screen (in this embodiment, only the left side is shown, and in a possible implementation, the user may also lightly press the right side of the screen) and slide upwards through a touch object (such as a finger of the user or a stylus), and the display device displays a brightness control as shown in (c) of FIG. 3 on the video play interface in response to the touch operation of the user. In this case, screen brightness of the display device is enhanced (not shown in (c) of FIG. 3). In addition, through the video processing method provided in the embodiments of this application, the frame of image displayed on the video play interface is processed, for example, determining luminance information corresponding to the frame of image, a dynamic range corresponding to the frame of image, and a dynamic range of the current display device. Tone mapping is performed on the frame of image based on the luminance information and the dynamic range corresponding to the frame of image, and the dynamic range of the current display device, to obtain an enhanced image corresponding to the frame of image.

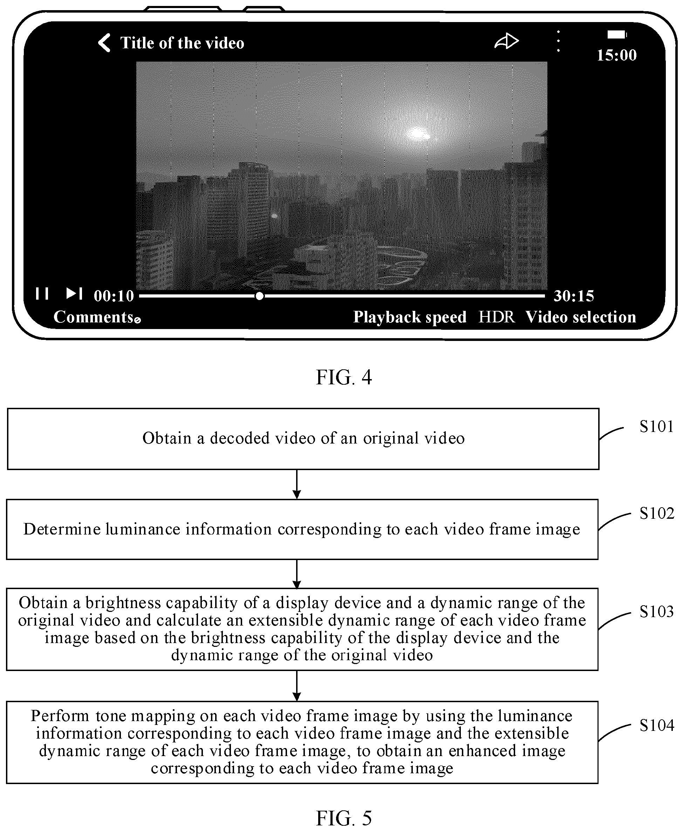

For ease of understanding, refer to FIG. 4. FIG. 4 is a schematic diagram of an enhanced image in another application scenario according to an embodiment of this application. Compared with the image displayed on the video play interface in FIG. 3, an enhanced image displayed on a video play interface in FIG. 4 has a significantly extended dynamic range. This can reproduce a real scene realistically and improve display effect.

In another example, that a display device is a mobile phone is still used for description. When the display device detects an operation that a user taps an icon of a video application on an application interface, the video application may be started, and a video application interface is displayed. The user may tap a favorite video in the video application interface and select a full-screen play mode. In this case, the display device displays a graphical user interface (graphical user interface, GUI) as shown in (a) of FIG. 3, where the GUI may be referred to as a video play interface. The video play interface may include an HDR control. When the display device detects that the user taps the HDR control, an HDR mode is started, and the video is played in the HDR mode.

In a process of playing the video in the HDR mode, each frame of image in the video is processed by using the video processing method provided in the embodiments of this application. For example, determining luminance information corresponding to each frame of image, a dynamic range corresponding to each frame of image, and a dynamic range of the current display device. Tone mapping is performed on each frame of image based on the luminance information and the dynamic range corresponding to each frame of image, and the dynamic range of the current display device, to obtain an enhanced image corresponding to each frame of image. A plurality of frames of enhanced images form an enhanced video, and the enhanced video is a video with an extended dynamic range. Therefore, when the enhanced video is played on the display device (for example, a mobile phone), the display effect is improved. For example, compared with an ordinary video, the enhanced video has more vivid pictures in color and clearer details, may provide more dynamic ranges and image details, greatly increase contrast between light and dark in picture details, and better reflect visual effect in a real environment.

In still another example, that a display device is a mobile phone is still used for description. If the user enables an automatic brightness adjustment function in the display device in advance, the display device may automatically adjust brightness when playing a video. Whenever the display device detects a brightness change, each frame of image at the brightness is processed through the video processing method provided in the embodiments of this application. For example, determining luminance information corresponding to each frame of image at the brightness, a dynamic range corresponding to each frame of image at the brightness, and a dynamic range of the current display device. Tone mapping is performed on each frame of image at the brightness based on the luminance information and the dynamic range corresponding to each frame of image at the brightness, and the dynamic range of the current display device, to obtain an enhanced image corresponding to each frame of image at the brightness. A plurality of frames of enhanced images at the brightness form an enhanced video at the brightness, and the enhanced video at the brightness is a video with an extended dynamic range. Therefore, when the enhanced video at the brightness is played on the display device (for example, a mobile phone), the display effect is improved.

It should be understood that scenarios shown in FIG. 3 and FIG. 4 are examples of application scenarios, and do not limit the application scenario of this application. The video processing method provided in the embodiments of this application may be applied to but not limited to the following scenarios:

a video call, a video conference application, a long or short video application, a live video broadcasting application, an online course video application, an intelligent camera movement application scenario, a system camera recording function for recording videos, a system camera shooting function for taking photos, video surveillance, an intelligent peep hole, and other scenarios.

The following describes in detail the video processing method provided in the embodiments of this application with reference to the accompanying drawings of this specification.

The video processing method provided in the embodiments of this application may be used for a video-related application scenario, where the video-related application scenario may include playing an online video by using a display device; or the video-related application scenario may include video shooting by using a display device; or the video-related application scenario may include live video broadcasting by using a display device, or the like. This is merely an example, and is not limited.

For example, the video processing method provided in the embodiments of this application is described by using an example in which the video-related application scenario includes playing an online video by using a display device.

Refer to FIG. 5. FIG. 5 is a schematic flowchart of a video processing method according to an embodiment of this application. As shown in FIG. 5, the video processing method includes the following S101-S104.

S101: Obtain a decoded video of an original video.

For example, the original video may include an SDR video, a video in a call, a video in a conference application, a video in a live broadcasting application, a video in a long or short video application, a surveillance video, a video recorded through a system camera recording function, or the like.

An original video is obtained, and the original video is decoded to obtain a decoded video of the original video. The decoded video includes a plurality of video frame images.

The decoded video may include two or more video frame images, and a quantity of the video frame images is not limited in the embodiments of this application.

In this embodiment of this application, an example in which the original video includes an SDR video is used for description. For example, the SDR video may be an online video played on a display device. The SDR video is decoded to obtain a decoded video of the SDR video. For example, the SDR video may be decoded by using a graphics processing unit (Graphics Processing Unit, GPU) in the display device to obtain the decoded video of the SDR video. For another example, the SDR video may be decoded by using a video processing card in the display device to obtain the decoded video of the SDR video. For another example, the SDR video may be decoded by using a video transcoding server to obtain the decoded video of the SDR video. This is merely an example, and is not limited.

S102: Determine luminance information corresponding to each video frame image.

For example, the decoded video is processed. For example, determining luminance information of each video frame image included in the decoded video. It can be understood that there are many manners to determine the luminance information corresponding to each video frame image, and each manner is described as follows.

In a possible implementation, a pixel format of the video frame image included in the decoded video may be determined first, and the luminance information corresponding to each video frame image is determined based on the pixel format. The pixel format may include a YUV format and an RGB format. It can be understood that for the same decoded video, pixel formats of video frame images included in the decoded video are the same.

If a pixel format of a video frame image is the YUV format, where Y represents luminance of the video frame image, a Y value corresponding to each video frame image may be directly obtained. The Y value represents luminance information corresponding to a video frame image.

If a pixel format of a video frame image is the RGB format, the following formula (1) may be used to determine luminance information of the video frame image.

$$L = 0.299 * R + 0.567 * G + 0.114 * B , (1)$$

In the foregoing formula (1), L represents the luminance information of the video frame image, *R* represents a value of a red component of the video frame image, *G* represents a value of a green component of the video frame image, and *B* represents a value of a blue component of the video frame image.

If a pixel format of a video frame image is the YUV format, to facilitate the display device to determine the luminance information of the video frame image, the pixel format of the video frame image may be converted from the YUV format to the RGB format first, and then the luminance information of the video frame image is determined by using formula (1). The pixel format of the video frame image may be converted from the YUV format to the RGB format by using the following formula (2).

$$R = Y + 1.4075 * V$$

$$G = Y - 0.3455 * U - 0.7169 * V$$

$$B = Y + 1.779 * U \text{ , (2)}$$

In the foregoing formula (2), *R* represents a value of a red component of the video frame image, *G* represents a value of a green component of the video frame image, *B* represents a value of a blue component of the video frame image, Y represents luminance of the video frame image, and U and V represent chrominance of the video frame image.

It should be understood that in this implementation, the luminance information may be digitized to 0-255, that is, a luminance level of each pixel in the video frame image may be represented by 0-255.

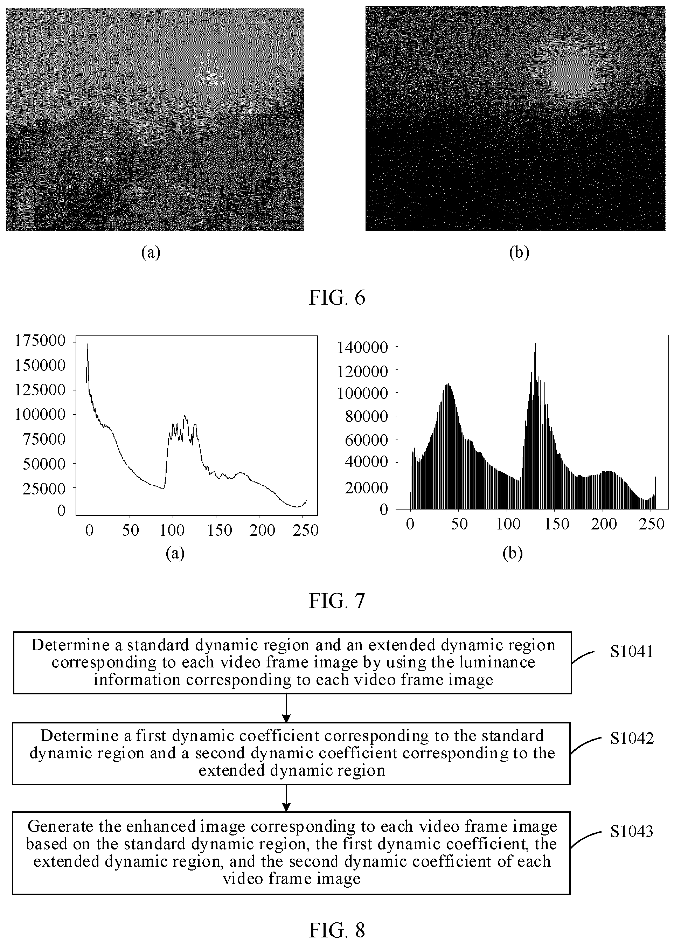

To show the luminance information corresponding to the video frame image more intuitively, refer to FIG. 6. FIG. 6 is a display diagram of luminance information according to an embodiment of this application. (a) in FIG. 6 shows a random video frame image, and (b) in FIG. 6 shows a display diagram of luminance information corresponding to the video frame image.

In another possible implementation, a luma histogram may be used to determine luminance information corresponding to each video frame image. For example, a luma histogram corresponding to each video frame image may be determined by running preset code, and a histogram distribution of each video frame image may be calculated by performing statistics on each luma histogram. The histogram distribution of each video frame image is used to represent the luminance information corresponding to each video frame image.

It should be understood that in this implementation, the luminance level of each pixel in the video frame image may be represented by a statistical frequency of each gray scale.

Refer to FIG. 7. FIG. 7 is a display diagram of another luminance information according to an embodiment of this application. (a) in FIG. 7 shows a luminance information histogram in one form, and (b) in FIG. 7 shows a luminance information histogram in another form. Both a horizontal axis in (a) of FIG. 7 and a horizontal axis in (b) of FIG. 7 represent luminance (namely, luminance values), and vertical axes represent quantities of pixels corresponding to luminance of the horizontal axes in a video frame image. The leftmost part of the horizontal axis represents the darkest part in the video frame image, the rightmost part of the horizontal axis represents the brightest part in the video frame image, and a middle value represents gray with different luminance. The larger the value is, the brighter the image is.

It is worth noting that, to improve efficiency, if the display device detects that a plurality of consecutive video frame images are similar, luminance information of one of the plurality of consecutive video frame images is determined, and the luminance information of the video frame image is used as luminance information of the some other similar video frame images. For example, if the display device detects that four consecutive video frame images are similar (for example, a similarity is greater than or equal to a preset similarity threshold), the display device determines luminance information of a first video frame image among the four video frame images, and uses the luminance information of the first video frame image as luminance information of other three video frame images. This is merely an example, and is not limited.

It should be understood that playing an online video on a display device is a process of displaying images frame by frame in time sequence, and that the display device determines luminance information corresponding to each video frame image is determining luminance information corresponding to each video frame image frame by frame in time sequence.

S103: Obtain a brightness capability of the display device and a dynamic range of the original video, and calculate an extensible dynamic range of each video frame image based on the brightness capability of the display device and the dynamic range of the original video.

For example, the brightness capability of the display device is obtained. A dynamic range of the display device is used to represent the brightness capability. It should be understood that each dynamic range corresponds to a peak brightness, and the higher the peak brightness is, the higher the dynamic range is, that is, the stronger the brightness capability of the display device is.

It should be understood that the brightness capability of the display device may be adjusted, for example, a current brightness capability of the display device is flexibly adjusted according to different requirements of a user. In other words, in different scenarios, the brightness capabilities of the display device may be the same or different. For example, when the display device plays an online video, the brightness capabilities of the display device may be the same or different in different scenes.

Optionally, in a possible implementation, obtaining the brightness capability of the display device may be obtaining a maximum brightness capability of the display device, that is, obtaining a maximum brightness capability that the display device may achieve. For example, when the dynamic range that the display device can express reaches 1000 nits, it is obtained that the maximum brightness capability of the display device is 1000 nits, or it is obtained that a luminance value of the dynamic range of the display device is 1000 nits. This is merely an example, and is not limited.

Optionally, in a possible implementation, if the user enables an automatic brightness adjustment function in the display device in advance, the display device may automatically adjust brightness. For example, the display device may automatically adjust the brightness when playing an online video. In this implementation, obtaining the brightness capability of the display device may be obtaining the current brightness capability of the display device in real time. For example, in an example, a display device automatically adjusts brightness to 800 nits when playing an online video, and it is obtained in real time that a current brightness capability of the display device is 800 nits. For another example, in another example, a display device automatically adjusts brightness to 400 nits when playing an online video, and it is obtained in real time that a current brightness capability of the display device is 400 nits. This is merely an example, and is not limited.

Optionally, in a possible implementation, the user may adjust the brightness according to requirements thereof. For example, when the display device plays an online video, in a current video play interface, the user may lightly press the left side of the screen (in a possible implementation, the user may also lightly press the right side of the screen) and slide upwards through a touch object (such as a finger of the user or a stylus), and the display device increases screen brightness in response to the touch operation of the user. If the user lightly presses the left (or right) side of the screen through the touch object and slides downwards, the display device reduces screen brightness in response to the touch operation of the user. In this implementation, obtaining the brightness capability of the display device may be obtaining the brightness capability of the display device after brightness adjustment. For example, when the display device adjusts the brightness to 600 nits in response to the touch operation of the user, it is obtained that the current brightness capability of the display device is 600 nits. This is merely an example, and is not limited.

For example, the dynamic range of the original video is obtained. In an example, obtaining the dynamic range of the original video refers to obtaining the dynamic range corresponding to the original video. In another example, to improve accuracy of the extensible dynamic range, thereby improving final display effect, an actual luminance statistical level of each video frame image may be considered. In this way, obtaining the dynamic range of the original video may be obtaining a dynamic range of the original video in a scene corresponding to each video frame image. In this embodiment of this application, a dynamic range of an SDR video may be obtained, or a dynamic range of an SDR video in a scene corresponding to each video frame image is obtained.

It should be understood that the display device provided in this embodiment of this application has a capability of automatically obtaining the dynamic range of the original video in the scene corresponding to each video frame image, that is, the display device may automatically obtain the dynamic range in the scene corresponding to each video frame image. In a possible implementation, the display device obtains that a dynamic range of an SDR video in a scene corresponding to a first video frame image is 200 nits, that is, the display device obtains that a luminance value of a dynamic range in the scene corresponding to the first video frame image is 200 nits. The first video frame image is used to represent any one of a plurality of video frame images included in the SDR video. This is merely an example, and is not limited.

For example, an extensible dynamic range of each video frame image may be calculated by using the brightness capability of the display device and the dynamic range of the original video. It should be understood that both the obtained brightness capability of the display device and the dynamic range of the original video may be expressed by using luminance values, a difference between two luminance values is calculated, and the difference is used as the extensible dynamic range of the video frame image.

For example, it is obtained that the current brightness capability of the display device is 600 nits, and the luminance value of the dynamic range in the scene corresponding to the first video frame image is 200 nits. A difference between 600 nits and 200 nits is calculated as 400 nits, and the difference, namely, 400 nits is used as the extensible dynamic range of the first video frame image.

It is worth noting that, to improve efficiency, if the display device detects that a plurality of consecutive video frame images are similar, an extensible dynamic range of one of the plurality of consecutive video frame images is calculated, and the extensible dynamic range of the video frame image is used as an extensible dynamic range of the some other similar video frame images. For example, if the display device detects that three consecutive video frame images are similar (for example, a similarity is greater than or equal to a preset similarity threshold), the display device calculates an extensible dynamic range of a first video frame image among the three video frame images, and uses the extensible dynamic range of the first video frame image as an extensible dynamic range of other three video frame images. This is merely an example, and is not limited.

It should be understood that playing an online video on a display device is a process of displaying images frame by frame in time sequence, and that the display device calculates an extensible dynamic range of each video frame image is calculating an extensible dynamic range of each video frame image frame by frame in time sequence.

S104: Perform tone mapping on each video frame image by using the luminance information corresponding to each video frame image and the extensible dynamic range of each video frame image, to obtain an enhanced image corresponding to each video frame image.

For example, the luminance information corresponding to each video frame image is used to determine an extended region of each video frame image. The extended region includes different regions in different implementations, and the extended region is used for tone mapping. This may be described in detail in the following embodiments. Tone mapping is performed on the extended region of each video frame image based on the extensible dynamic range of each video frame image. Based on a mapping result, the enhanced image corresponding to each video frame image is generated.

Compared with a corresponding video frame image, the enhanced image has more vivid pictures in color and clearer details, may provide more dynamic ranges and image details, greatly increase contrast between light and dark in picture details, and can better reflect visual effect in a real environment.

In the video processing method provided in the embodiments of this application, luminance information corresponding to each video frame image in the decoded video of the original video is determined; an extensible dynamic range of each video frame image is calculated by using the brightness capability of the display device and the dynamic range of the original video; and tone mapping is performed on each video frame image by using the luminance information corresponding to each video frame image and the extensible dynamic range of each video frame image, to obtain an enhanced image corresponding to each video frame image. When the extensible dynamic range of each video frame image is determined, the brightness capability of the display device and the dynamic range of the original video are fully considered, and then tone mapping is performed on each video frame image by using the extensible dynamic range, so that the dynamic range of the video frame image is actually extended, that is, the enhanced image is an image with an extended dynamic range. Therefore, a dynamic range of a video including a plurality of enhanced images is also extended, so that when the video with the extended dynamic range is displayed on the display device, display effect and user experience are improved.

Optionally, in a possible implementation, in addition to including S101-S104, the video processing method provided in this embodiment of this application may further include S105. Details are as follows.

S105: Generate an enhanced video based on a plurality of enhanced images.

The enhanced video is a video with an extended dynamic range, that is, the enhanced video is a video for which a dynamic range is extended. An enhanced image corresponding to each video frame image is arranged in time sequence to obtain an enhanced video, and the enhanced video may be played on the display device. In this implementation, after a video frame image is processed, an enhanced image corresponding to the video frame image is displayed on the display device. Because a processing speed of the display device is very fast, the user may watch a video smoothly, and the video is a video with an extended dynamic range, which improves user experience.

The following describes in detail a process of generating an enhanced image corresponding to a video frame image.

Refer to FIG. 8. FIG. 8 is a schematic flowchart of generating an enhanced image corresponding to a video frame image according to an embodiment of this application. As shown in FIG. 8, S104 may include S1041-S1043.

S1041: Determine a standard dynamic region and an extended dynamic region corresponding to each video frame image by using the luminance information corresponding to each video frame image.

For example, the extended region in S104 includes the standard dynamic region and the extended dynamic region in this implementation.

The extended dynamic region is a region divided in a video frame image, the extended dynamic region includes several pixels in the video frame image, and a pixel value of the pixel in the extended dynamic region may not be adjusted, that is, the pixel value of the pixel in the extended dynamic region retains an original pixel value.

The standard dynamic region is another region divided in the video frame image, and the standard dynamic region also includes several pixels in the video frame image. Different from that of the pixel in the extended dynamic region, a pixel value of the pixel in the standard dynamic region needs to be adjusted.

For example, if a pixel format of the video frame image included in the decoded video is determined first, and the luminance information corresponding to each video frame image is determined based on the pixel format, in this implementation, the luminance information may be digitized to 0-255, that is, a luminance level of each pixel in the video frame image may be represented by 0-255. Therefore, pixels of each video frame image may be divided by using a preset threshold and the luminance information of each video frame image. For example, the pixels of each video frame image are classified into pixels with luminance information less than the preset threshold and pixels with luminance information greater than or equal to the preset threshold. It should be understood that a region including the pixels with luminance information less than the preset threshold is the standard dynamic region, and a region including the pixels with luminance information greater than or equal to the preset threshold is the extended dynamic region.

The preset threshold may be set by the user, may be calculated by using a gray scale ratio, and may also be determined by using a machine learning model. This is merely an example, and is not limited.

In this implementation, two regions, the standard dynamic region and the extended dynamic region, are divided by using one preset threshold. To enable a finally extended dynamic range to have better effect, in a possible implementation, a finer division may be implemented by using a plurality of preset threshold ranges, that is, pixels of each video frame image are divided by using a plurality of preset threshold ranges and luminance information of each video frame image. For example, for the pixels of each video frame image, pixels with luminance information belonging to a first preset threshold range are classified into pixels in the standard dynamic region, and pixels with luminance information belonging to a second preset threshold range are classified into pixels in the extended dynamic region. The first preset threshold range and the second preset threshold range are different. It should be understood that the luminance information of the pixel belonging to the first preset threshold range is less than the luminance information of the pixel belonging to the second preset threshold range.

S1042: Determine a first coefficient corresponding to the standard dynamic region and a second coefficient corresponding to the extended dynamic region.

For example, the first coefficient is less than the second coefficient.

Based on the dynamic range of the original video and the extensible dynamic range of each video frame image, the first coefficient corresponding to the standard dynamic region is determined. For example, the dynamic range of the original video is recorded as A, the extensible dynamic range of each video frame image is recorded as B, a quotient between A and B is calculated, and the quotient is used as the first coefficient corresponding to the standard dynamic region. A value of A is usually less than a value of B. Therefore, the first coefficient corresponding to the standard dynamic region is less than 1.

It is worth noting that, in this embodiment of this application, the dynamic range of the original video may include a dynamic range of an SDR video in a scene corresponding to each video frame image.

For example, because the pixel value of the pixel in the extended dynamic region may not need to be adjusted, the second coefficient corresponding to the extended dynamic region may be set to 1.

It should be understood that when overall brightness of the display device is increased, luminance of the video frame image is also increased as a whole, and the contrast or dynamic range of the video frame image is not extended in this case. When a bright region in the video frame image is reserved, and luminance of other regions is reduced, the dynamic range of the video frame image may be extended. Therefore, the second coefficient corresponding to the extended dynamic region may be set to 1, so that the pixel value of the pixel in the extended dynamic region retains the original pixel value. The first coefficient corresponding to the standard dynamic region is less than 1, so that the pixel value of the pixel in the standard dynamic region may be reduced.

Optionally, in a possible implementation, the pixel value of the pixel in the standard dynamic region may not need to be adjusted, and therefore, the first coefficient corresponding to the standard dynamic region may be set to 1. The pixel value of the pixel in the extended dynamic region is increased, and therefore, the second coefficient corresponding to the extended dynamic region may be set to a value greater than 1. For example, for example, the dynamic range of the original video is recorded as A, the extensible dynamic range of each video frame image is recorded as B, a quotient between B and A is calculated, and the quotient is used as the second coefficient corresponding to the standard dynamic region. A value of A is usually less than a value of B. Therefore, the second coefficient corresponding to the extended dynamic region is greater than 1.

It should be understood that when overall brightness of the display device is increased, luminance of the video frame image is also increased as a whole, and the contrast or dynamic range of the video frame image is not extended in this case. When luminance of other regions in the video frame image is reserved, and luminance of a bright region in the video frame image is increased, the dynamic range of the video frame image may be extended. Therefore, the second coefficient corresponding to the extended dynamic region is greater than 1, so that the pixel value of the pixel in the extended dynamic region may be increased. The first coefficient corresponding to the standard dynamic region is set to 1, so that the pixel in the standard dynamic region retains the original pixel value.

S1043: Generate the enhanced image corresponding to each video frame image based on the standard dynamic region, the first coefficient, the extended dynamic region, and the second coefficient of each video frame image.

Tone mapping is performed on the pixel in the standard dynamic region based on the first coefficient, and tone mapping is performed on the pixel in the extended dynamic region based on the second coefficient, to obtain the enhanced image corresponding to each video frame image.

For example, for each pixel in the standard dynamic region, a product between an original pixel value of the pixel and the first coefficient is calculated, and the product is used as a new pixel value of the pixel.

Optionally, in a possible implementation, for each pixel in the extended dynamic region, a product between an original pixel value of the pixel and the second coefficient is calculated, and the product is used as a new pixel value of the pixel.

Optionally, in a possible implementation, because the second coefficient corresponding to the extended dynamic region is 1, for each pixel in the extended dynamic region, an original pixel value of the pixel may be saved without processing.

For each video frame image, an enhanced image corresponding to the video frame image is generated based on a pixel with an adjusted pixel value. It should be understood that in this implementation, if pixel values of all pixels in a video frame image are adjusted, an enhanced image corresponding to the video frame image is generated based on all the pixels with adjusted pixel values. If pixel values of some pixels in the video frame image are adjusted, an enhanced image corresponding to the video frame image is generated based on both the pixels with adjusted pixel values and pixels with non-adjusted pixel values. This is merely an example, and is not limited.

It should be understood that in this implementation, tone mapping is performed on each video frame image, that is, pixel values of pixels in different regions (such as the standard dynamic region and the extended dynamic region) are adjusted based on different coefficients (such as the first coefficient and the second coefficient).

In this implementation, an adjustable region, namely, the standard dynamic region and the extended dynamic region, in each video frame image is determined by using the luminance information corresponding to each video frame image; and different coefficients are determined for the standard dynamic region and the extended dynamic region, and pixel values of pixels in different regions (such as the standard dynamic region and the extended dynamic region) are adjusted based on different coefficients (such as the first coefficient and the second coefficient). This reduces the pixel value of the pixel in the standard dynamic region in addition to maintaining the pixel value of the pixel in the extended dynamic region, so that a dynamic range of a finally generated enhanced image can be actually extended. Then, a dynamic range of a video including a plurality of enhanced images is also extended, so that when the video with the extended dynamic range is displayed on the display device, display effect and user experience are improved.

Optionally, if the second coefficient corresponding to the extended dynamic region is greater than 1, and the first coefficient corresponding to the standard dynamic region is 1, for each pixel in the extended dynamic region, a product between an original pixel value of the pixel and the second coefficient is calculated, and the product is used as a new pixel value of the pixel.

For each pixel in the standard dynamic region, a product between an original pixel value of the pixel and the first coefficient is calculated, and the product is used as a new pixel value of the pixel. Alternatively, because the first coefficient corresponding to the standard dynamic region is 1 in this case, for each pixel in the standard dynamic region, an original pixel value of the pixel may be saved without processing.

In this implementation, an adjustable region, namely, the standard dynamic region and the extended dynamic region, in each video frame image is determined by using the luminance information corresponding to each video frame image; and different coefficients are determined for the standard dynamic region and the extended dynamic region, and pixel values of pixels in different regions (such as the standard dynamic region and the extended dynamic region) are adjusted based on different coefficients (such as the first coefficient and the second coefficient). This increases the pixel value of the pixel in the extended dynamic region in addition to maintaining the pixel value of the pixel in the standard dynamic region, so that a dynamic range of a finally generated enhanced image can be actually extended. Then, a dynamic range of a video including a plurality of enhanced images is also extended, so that when the video with the extended dynamic range is displayed on the display device, display effect and user experience are improved.

In the foregoing implementation, pixel values of pixels in different regions (such as the standard dynamic region and the extended dynamic region) are adjusted based on different coefficients (such as the first coefficient and the second coefficient). In a possible implementation, a coefficient corresponding to each pixel may also be calculated one by one based on an actual luminance level of each pixel in the video frame image. For each pixel, a pixel value of the pixel is adjusted based on the coefficient corresponding to the pixel. For example, a product between an original pixel value of the pixel and the coefficient is calculated, and the product is used as a new pixel value of the pixel. After all pixels are adjusted, an enhanced image corresponding to the video frame image is generated based on all the pixels with adjusted pixel values. In this implementation, each pixel is adjusted individually in a targeted manner, so that a dynamic range of a finally generated enhanced image is extended effectively, and quality of the finally generated enhanced image is also improved.

The following describes in detail another process of generating an enhanced image corresponding to a video frame image.

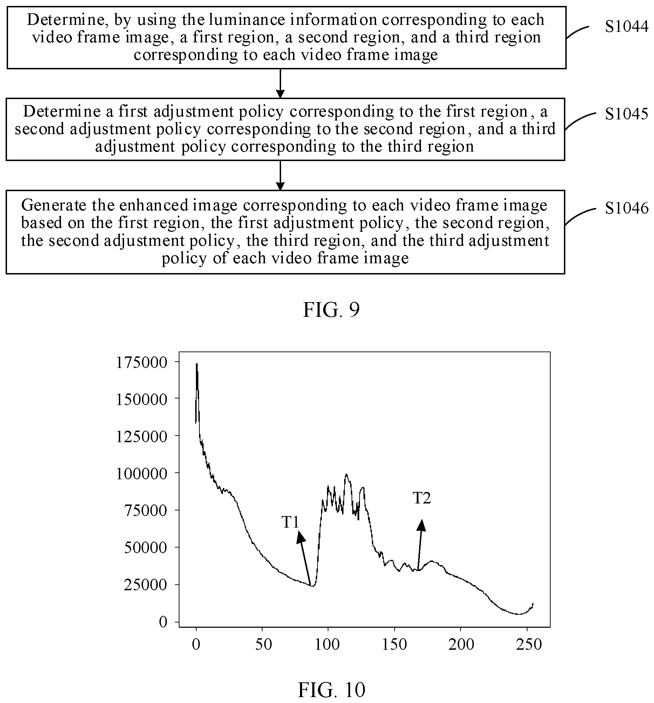

Refer to FIG. 9. FIG. 9 is another schematic flowchart of generating an enhanced image corresponding to a video frame image according to an embodiment of this application. As shown in FIG. 9, S104 may include S1044-S1046. It is worth noting that S1044-S1046 is juxtaposed with S1041-S1043, and S1041-S1043 or S 1044-S 1046 may be performed according to an actual situation, instead of S 1044-S 1046 being performed after S1041-S1043.

S1044: Determine, by using the luminance information corresponding to each video frame image, a first region, a second region, and a third region corresponding to each video frame image.

For example, the extended region in S104 includes the first region, the second region, and the third region in this implementation.

The first region may represent a low gray scale region, the second region may represent a medium gray scale region, and the third region may represent a high gray scale region.

At least one of the first region, the second region, and the third region is a region on which tone mapping needs to be performed again. In a possible implementation, current luminance of the first region and the second region may be maintained, and the third region is used as the region on which tone mapping needs to be performed again. For example, current luminance of the low gray scale region and the medium gray scale region is maintained, and luminance of the high gray scale region is increased. In another possible implementation, the first region, the second region, and the third region are all regarded as regions on which tone mapping needs to be performed again. For example, luminance of all of the low gray scale region, the medium gray scale region, and the high gray scale region is increased. It should be understood that a magnitude of luminance increasing for different regions may be the same or different. In still another possible implementation, current luminance of the second region and the third region may be maintained, and luminance of the first region is reduced. For example, current luminance of the medium gray scale region and the high gray scale region is maintained, and luminance of the low gray scale region is reduced.

For example, if the luminance information corresponding to each video frame image is determined by using a luma histogram, a luma histogram of each video frame image may be divided by using T1 and T2. For ease of understanding, refer to FIG. 10. FIG. 10 is a schematic diagram of region division according to an embodiment of this application. As shown in FIG. 10, a luminance distribution represented by the luma histogram is divided into three regions by using T1 and T2, for example, a first region [0, T1), a second region [T1, T2], and a third region (T2, 255].

Values of T1 and T2 may be set by the user or determined by using a machine learning model. In a training process, the machine learning model learns a gray scale distribution of pixels in a luma histogram of a video frame image, and determines two values based on the distribution, where the two values are the values of T1 and T2 respectively. For example, in this implementation, the luma histogram of the video frame image may be input into the machine learning model, and the machine learning model analyzes the luma histogram and outputs the values of T1 and T2. This is merely an example, and is not limited.

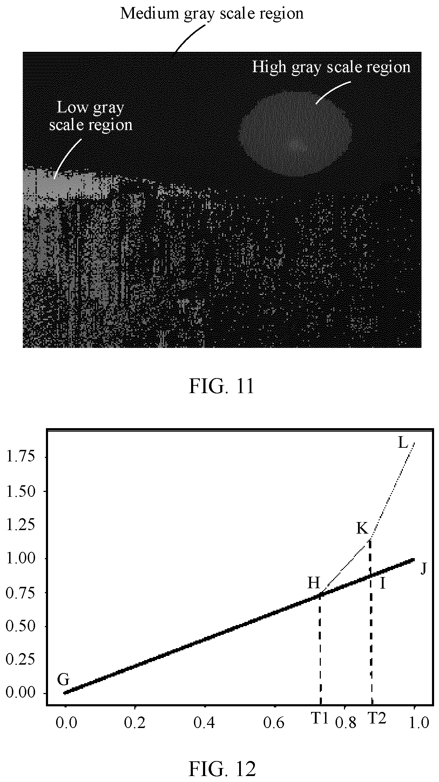

To show division of a luminance region more intuitively, refer to FIG. 11. FIG. 11 is a schematic diagram of luminance region division according to an embodiment of this application. As shown in FIG. 11, a bright gray region (including an uneven distribution of bright gray dots shown in FIG. 11) is classified into the first region, namely, the low gray scale region, a black region (including all black regions shown in FIG. 11) is classified into the second region, namely, the medium gray scale region, and a dark gray region is classified into the third region, namely, the high gray scale region. It is worth noting that colors shown in FIG. 11 are only used to distinguish each luminance region, and do not represent true colors of the video frame image.

In this implementation, three regions: the low gray scale region, the medium gray scale region, and the high gray scale region, are classified by using T1 and T2. To enable a finally extended dynamic range to have better effect, in a possible implementation, a finer division may be implemented by using a plurality of values (for example, values similar to T1 and T2), that is, the luminance distribution represented by the luma histogram is divided into a plurality of regions by using the plurality of values.

S1045: Determine a first adjustment policy corresponding to the first region, a second adjustment policy corresponding to the second region, and a third adjustment policy corresponding to the third region.

Refer to FIG. 12. FIG. 12 is a schematic diagram of tone mapping according to an embodiment of this application. In FIG. 12, a horizontal axis represents normalized values of a 255 gray scale, and a vertical axis represents gray scale values obtained after tone mapping. For example, an SDR is usually linear mapping, such as a black straight line shown in FIG. 12, and a function corresponding to the black straight line may be: $y = k * x$.

It should be understood that the first region, the second region, and the third region correspond to different straight lines in FIG. 12. As shown in FIG. 12, the first region corresponds to a straight line GH, the second region corresponds to a straight line HI, and the third region corresponds to a straight line IJ. A function corresponding to the straight line GH is: $y = k * x$.

An adjusted gray scale value of a pixel in the low gray scale region may be determined by using the first adjustment policy. For example, a third coefficient corresponding to the low gray scale region is determined based on the extensible dynamic range of each video frame image; and tone mapping is performed on the pixel in the low gray scale region based on the third coefficient, to obtain the adjusted gray scale value of the pixel in the low gray scale region.

The first adjustment policy for the first region may be: enable an adjusted gray scale value of each pixel in the low gray scale region and a gray scale value before adjustment to satisfy $y_1 = (A / B) * k * x_1$. For example, a slope of the straight line GH is adjusted. A function corresponding to the adjusted straight line GH in the first region is: $y_1 = (A / B) * k * x_1$.

$x_1$ represents a gray scale value of a pixel in the low gray scale region before adjustment, $y_1$ represents an adjusted gray scale value of the pixel in the low gray scale region, $A / B$ represents the third coefficient, $A$ represents the dynamic range of the original video, $B$ represents the extensible dynamic range of each video frame image, and $k$ represents a constant.

Optionally, in a possible implementation, to increase brightness of a whole video, the function corresponding to the adjusted straight line GH in the first region may also be: $y_1 = M*(A/B)*k*x_1$, $(M>1)$ To be specific, an adjusted gray scale value of each pixel in the low gray scale region and a gray scale value before adjustment may also satisfy $y_1 = M*(A/B)*k*x_1$, $(M>1)$.

$x_1$ represents a gray scale value of a pixel in the low gray scale region before adjustment, $y_1$ represents an adjusted gray scale value of the pixel in the low gray scale region, $M * (A / B)$ represents the third coefficient, $A$ represents the dynamic range of the original video, $B$ represents the extensible dynamic range of each video frame image, and $M$ and $k$ represent constants.

It should be understood that a value of $M$ may be set by the user according to an actual situation, and this is not limited.

An adjusted gray scale value of a pixel in the medium gray scale region may be determined by using the second adjustment policy.

The second adjustment policy for the second region may be: enable an adjusted gray scale value of each pixel in the medium gray scale region and a gray scale value before adjustment to satisfy $y_2 = k1 * x_2 + b1$. For example, the straight line HI corresponding to the second region may be adjusted to the straight line HK, that is, original linear tone mapping corresponding to the second region is expanded. For example, a function corresponding to the original straight line HI in the second region is: $y = k * x$, and a function corresponding to the adjusted straight line HK in the second region is: $y_2 = k1 * x_2 + b1$.

$x_2$ represents a gray scale value of a pixel in the medium gray scale region before adjustment, $y_2$ represents an adjusted gray scale value of the pixel in the medium gray scale region, and $k1$ and $b1$ represent constants.

An adjusted gray scale value of a pixel in the high gray scale region may be determined by using the third adjustment policy.

The third adjustment policy for the third region may be: enable an adjusted gray scale value of each pixel in the high gray scale region and a gray scale value before adjustment to satisfy $y_3 = k2 * x_3 + b2$. For example, the straight line IJ corresponding to the third region may be adjusted to the straight line KL, that is, original linear tone mapping corresponding to the third region is expanded. For example, a function corresponding to the original straight line IJ in the third region is: $y = k * x$, and a function corresponding to the adjusted straight line KL in the third region is: $y_3 = k2 * x_3 + b2$.

$x_3$ represents a gray scale value of a pixel in the high gray scale region before adjustment, $y_3$ represents an adjusted gray scale value of the pixel in the high gray scale region, and $k2$ and $b2$ represent constants.

It is worth noting that values of $k1$, $b1$, $k2$, and $b2$ may be set based on a proportion of luminance gray scale distribution, or may be determined by using a machine learning model. For example, in a training process, the machine learning model learns a gray scale distribution of pixels in a luma histogram of a video frame image in different scenarios, and predicts the values of $k1$, $b1$, $k2$, and $b2$ based on the distribution. This is merely an example, and is not limited.

S1046: Generate the enhanced image corresponding to each video frame image based on the first region, the first adjustment policy, the second region, the second adjustment policy, the third region, and the third adjustment policy of each video frame image.

For example, the functions respectively corresponding to the adjusted first region, second region, and third region are determined in S1045. For any function, an $x$ value is input, and a $y$ value is output correspondingly. The $y$ value represents a gray scale value obtained after tone mapping, that is, an adjusted luminance value is obtained. Luminance of a video frame image is adjusted correspondingly based on the adjusted luminance value, to obtain an enhanced image corresponding to the video frame image. Generally speaking, an original gray scale value of a pixel is $x$, an adjusted gray scale value of the pixel is determined, by using these functions, as $y$, luminance of the pixel in the video frame image is adjusted correspondingly based on the $y$ value, to obtain an enhanced image corresponding to the video frame image.

For example, for the third region, a $y_3$ value corresponding to an $x_3$ value of each pixel in the third region is determined according to $y_3 = k2 * x_3 + b2$, and the $x_3$ value of each pixel in the third region is adjusted to the $y_3$ value in the video frame image. With a similar method, each pixel in the first region and the second region is also adjusted correspondingly, and the enhanced image corresponding to the video frame image is obtained.

In this implementation, an adjustable region, namely, a low gray scale region, a medium gray scale region, and a high gray scale region, in each video frame image is determined by using the luminance information corresponding to each video frame image; and different adjustment policies are determined for the low gray scale region, the medium gray scale region, and the high gray scale region, and gray scale values of pixels in different regions are adjusted according to the different adjustment policies, so that a dynamic range of a finally generated enhanced image is actually extended. Then, a dynamic range of a video including a plurality of enhanced images is also extended, so that when the video with the extended dynamic range is displayed on the display device, display effect and user experience are improved.

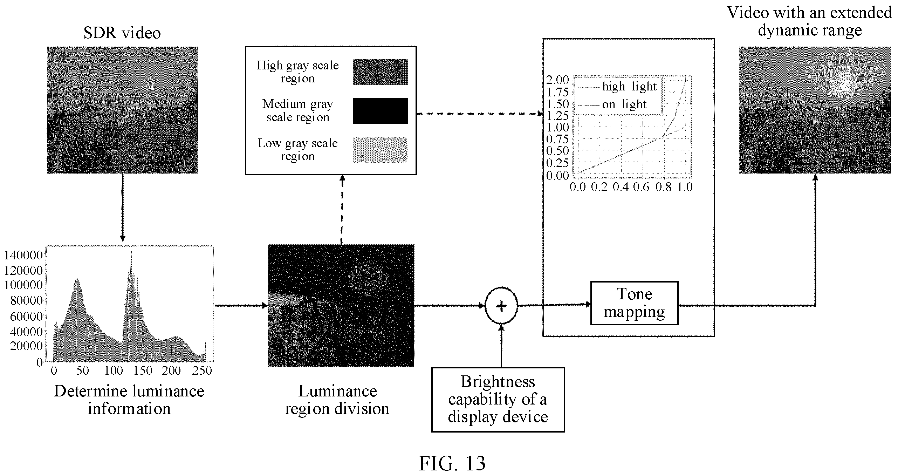

With reference to FIG. 13, the following describes the video processing method provided in this embodiment of this application again. Refer to FIG. 13. FIG. 13 is a schematic diagram of an implementation process according to an example embodiment of this application. For example, after an SDR video is obtained, the SDR video is decoded to obtain a decoded video of the SDR video, where the decoded video may include two or more frames of video frame image. FIG. 13 shows a video frame image in a decoded video of an SDR video.

Luminance information corresponding to the video frame image is determined. FIG. 13 shows luminance information corresponding to a video frame image in the form of luma histogram. The luminance information corresponding to the video frame image is used for luminance region division, to obtain a low gray scale region, a medium gray scale region, and a high gray scale region.

With reference to a brightness capability of the display device and the dynamic range of the SDR video, tone mapping is performed on the low gray scale region, the medium gray scale region, and the high gray scale region corresponding to the video frame image, to obtain an enhanced image corresponding to the video frame image. In this way, the dynamic range of the video frame image is actually extended, that is, the enhanced image is an image with an extended dynamic range. Therefore, a dynamic range of a video (that is, the video with the extended dynamic range shown in FIG. 13) including a plurality of enhanced images is also extended, so that when the video with the extended dynamic range is displayed on the display device, display effect and user experience are improved.

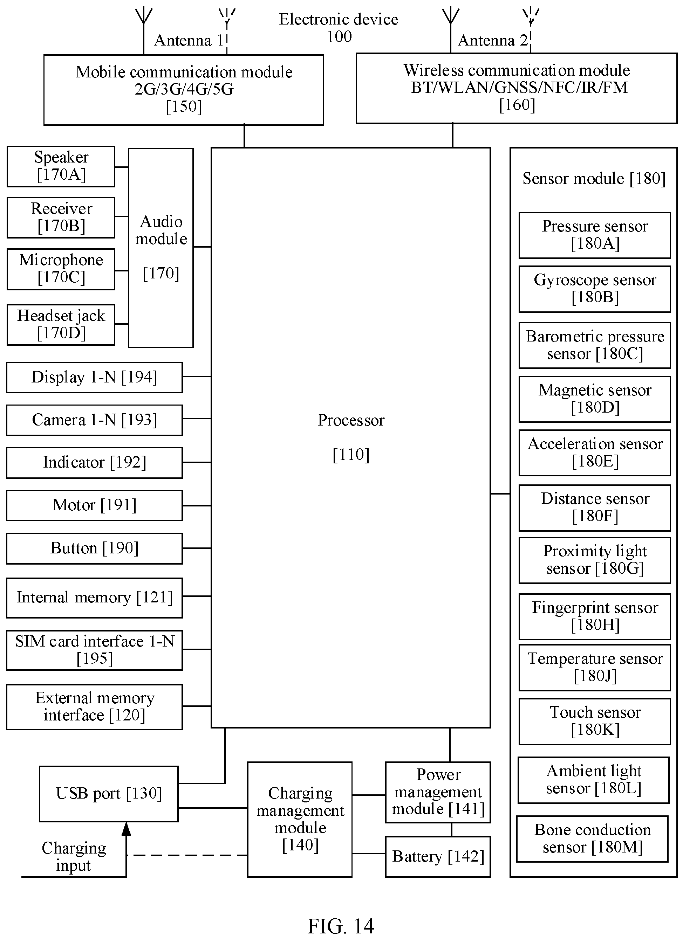

The foregoing describes in detail the video processing method provided in the embodiments of this application with reference to FIG. 1 to FIG. 13. The following describes in detail a hardware system, an apparatus, and a chip of a display device to which this application is applicable with reference to FIG. 14 to FIG. 16. It should be understood that the hardware system, the apparatus, and the chip in this embodiment of this application may perform the video processing methods in the foregoing embodiments of this application. That is, for specific working processes of the following products, refer to corresponding processes in the foregoing method embodiments.

The video processing method provided in the embodiments of this application may be applied to various display devices, and correspondingly, the display apparatus provided in the embodiments of this application may be a display device of a plurality of forms.

In some embodiments of this application, the display device may be various camera apparatuses such as a single-lens reflex camera and a cube camera, a mobile phone, a tablet computer, a wearable device, a television, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and the like, or may be another device or apparatus capable of image processing. A specific type of the display device is not limited in the embodiments of this application.

The following uses an example in which the display device is a mobile phone. FIG. 14 is a schematic diagram of a structure of a display device according to an embodiment of this application.

The display device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It should be noted that, the structure shown in FIG. 14 does not constitute a specific limitation on the display device 100. In some other embodiments of this application, the display device 100 may include more or less components than those shown in FIG. 14, or the display device 100 may include a combination of some of the components shown in FIG. 14, or the display device 100 may include sub-components of some of the components shown in FIG. 14. The components shown in FIG. 14 may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The controller may be a nerve center and a command center of the display device 100. The controller may generate an operation control signal based on an instruction operation code and a time sequence signal, to complete control of instruction fetching and instruction executing.

A memory may be further disposed in the processor 110, and is configured to store an instruction and data. In some embodiments, the memory in the processor 110 is a cache. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

In this embodiment of this application, the processor 110 may run software code of the video processing method provided in the embodiments of this application, thereby effectively extending a dynamic range of an original video.

A connection relationship among modules shown in FIG. 14 is merely an example for description, and constitutes no limitation on the connection relationship among the modules of the display device 100. Optionally, the modules of the display device 100 may alternatively use a combination of a plurality of connection manners in the above embodiment.

A wireless communication function of the display device 100 may be implemented by using the antenna 1, the antenna 2, the mobile communication module 150, the wireless communication module 160, the modem processor, the baseband processor, and other components.

The antenna 1 and the antenna 2 are configured to transmit and receive an electromagnetic wave signal. Each antenna in the display device 100 may be configured to cover a single or a plurality of communication frequency bands. Different antennas may be multiplexed to improve antenna utilization. For example, the antenna 1 may be multiplexed into a diversity antenna of a wireless local area network. In some other embodiments, an antenna may be used in combination with a tuning switch.

The display device 100 may implement a display function by using the GPU, the display 194, and the application processor. The GPU is a microprocessor for image processing, and is connected to the display 194 and the application processor. In this embodiment of this application, the GPU may be used to decode an original video (such as an SDR video), to obtain a decoded video of the original video (such as an SDR video). The GPU may further be configured to: perform mathematical and pose computation, render an image, and the like. The processor 110 may include one or more GPUs, and the GPUs execute a program instruction to generate or change display information.

For example, in this embodiment of this application, the processor 110 may be configured to perform the following steps: obtaining a decoded video of an original video; determining luminance information corresponding to each video frame image; obtaining a brightness capability of the display device and a dynamic range of the original video, and calculating an extensible dynamic range of each video frame image based on the brightness capability of the display device and the dynamic range of the original video; and performing tone mapping on each video frame image by using the luminance information corresponding to each video frame image and the extensible dynamic range of each video frame image, to obtain an enhanced image corresponding to each video frame image.

The display 194 may be configured to display an image or a video. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diode, QLED), or the like. In some embodiments, the display device 100 may include 1 or N displays 194, where N is a positive integer greater than 1.

In this embodiment of this application, the display 194 may be configured to display an original video, a plurality of video frame images included in a decoded video, an enhanced image, an enhanced video including enhanced images (namely, a video with an extended dynamic range), and the like.

The display 194 in the embodiments of this application may be a touchscreen. The display 194 may be integrated with a touch sensor 180K. The touch sensor 180K may be also referred to as a "touch panel". That is, the display 194 may include a display panel and a touch panel. The touch sensor 180K and the display 194 form a touchscreen, which is also referred to as a "touch control screen". The touch sensor 180K is configured to detect a touch operation performed on or near the touch sensor 180K, for example, the user lightly presses the left side of the screen of the display device 100 and slides upwards through a touch object (such as a finger of the user or a stylus). After being detected by the touch sensor 180K, the touch operation may be transmitted to an upper layer by a driver of a kernel layer (such as a TP driver), to determine a type of touch event. A visual output related to the touch operation may be provided by using the display 194. In some other embodiments, the touch sensor 180K may be alternatively disposed on a surface of the display device 100, and is located on a position different from that of the display 194.

The display device 100 may implement photographing and recording functions by using the ISP, the camera 193, the video codec, the GPU, the display 194, the application processor, and the like.

The ISP is configured to process data fed back by the camera 193. For example, when a video is photographed and recorded, light is transferred to a photosensitive element of the camera through a lens, and an optical signal is converted into an electrical signal. The photosensitive element of the camera transfers the electrical signal to the ISP for processing, and therefore, the electrical signal is converted into an image visible to a naked eye. The ISP may optimize an algorithm for noise, brightness, and complexion of the image, and the ISP may further optimize parameters, such as exposure and color temperature of a recording scenario. In some embodiments, the ISP may be arranged in the camera 193.

The camera 193 is configured to capture images or videos. It may be triggered by an application instruction to realize shooting and recording functions, such as recording and obtaining a video in live video broadcasting, video conference, video call, video surveillance, and other scenarios. The camera may include an imaging lens, a light filter, an image sensor, and other components. Light emitted or reflected by an object enters the imaging lens, passes through the light filter, and finally converges on the image sensor. The image sensor is mainly configured to focus and image light emitted or reflected by all objects in a recording perspective; the light filter is mainly configured to filter out redundant light waves (for example, light waves other than visible light, such as infrared) in the light; and the image sensor is mainly configured to: perform photoelectric conversion on a received optical signal, to obtain an electrical signal, and input the electrical signal to the processor 110 for subsequent processing. The camera 193 may be located in front of the display device 100 or on the back of the display device 100. A specific quantity and arrangement of cameras may be set according to requirements, and is not limited in this application.

For example, in this embodiment of this application, the camera 193 may obtain a recorded video.

The digital signal processor is configured to process a digital signal, and may process another digital signal in addition to a digital image signal. For example, when the display device 100 performs frequency selection, the digital signal processor is configured to perform Fourier transform and the like on frequency energy.

The video codec is configured to: compress or decompress a digital video. The display device 100 may support one or more video codecs. In this embodiment of this application, the video codec may be used to decode an original video (such as an SDR video), to obtain a decoded video of the original video (such as an SDR video).

The gyroscope sensor 180B may be configured to determine a motion posture of the display device 100. In some embodiments, an angular velocity of the display device 100 around three axes (that is, x, y, and z axes) may be determined through the gyroscope sensor 180B. The gyroscope sensor 180B may be used for image stabilization during photographing or recording. For example, during photographing or recording, the gyroscope sensor 180B detects an angle at which the display device 100 jitters, and calculates, based on the angle, a distance for which a lens module needs to compensate, and allows the lens to cancel the jitter of the display device 100 through reverse motion, thereby implementing image stabilization. The gyroscope sensor 180B may also be used for scenes such as navigation and a motion sensing game.

The acceleration sensor 180E may detect magnitudes of accelerations of the display device 100 in various directions (generally in x, y, and z axes). When the display device 100 is stationary, a magnitude and a direction of a gravity may be detected. The acceleration sensor 180E may be further configured to recognize poses of the display device 100, and the poses serve as input parameters for landscape and portrait mode switchover, a pedometer and other applications.

The distance sensor 180F is configured to measure a distance. The display device 100 may measure a distance in an infrared manner or a laser manner. In some embodiments, for example, in a photographing or recording scenario, the display device 100 may measure a distance by using the distance sensor 180F, to implement quick focusing.

The ambient light sensor 180L is configured to sense ambient light brightness. The display device 100 may adaptively adjust brightness of the display 194 based on the sensed ambient light brightness. The ambient light sensor 180L may also be configured to automatically adjust a white balance during photographing. The ambient light sensor 180L may also cooperate with the proximity light sensor 180G to detect whether the display device 100 is in a pocket, to avoid an accidental touch.

The fingerprint sensor 180H is configured to collect a fingerprint. The display device 100 may implement unlocking, application lock access, photographing, answering incoming calls, and other functions by using features of the acquired fingerprint.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The display device 100 determines pressure intensity based on the change in the capacitance. When a touch operation is performed on the display 194, the display device 100 detects intensity of the touch operation through the pressure sensor 180A. The display device 100 may calculate a touch location based on a detection signal of the pressure sensor 180A. In some embodiments, touch operations that are performed in a same touch position but have different touch operation intensity may correspond to different operation instructions.

The button 190 includes a power button, a volume button, and the like. The button 190 may be a mechanical button, or may be a touch button. The display device 100 may receive a button input, and generate a button signal input related to a user setting and function control of the display device 100. In this embodiment of this application, when the display device 100 plays an online video, if the left side of the screen is used to control screen brightness, then the right side of the screen is used to control the volume. If the right side of the screen is used to control the screen brightness, then the left side of the screen is used to control the volume. For example, the user lightly presses the left side of the screen of the display device 100 and slides upwards and downwards through a touch object (such as a finger of the user or a stylus), and the display device 100 increases or reduces screen brightness in response to the touch operation. The user lightly presses the right side of the screen of the display device 100 and slides upwards and downwards through a touch object, and the display device 100 turns up or down the sound of the display device 100 in response to the touch operation.

The motor 191 may generate a vibration prompt. The motor 191 may be configured to provide an incoming call vibration prompt or a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the display device 100. The display device 100 may support 1 or N SIM card interfaces, where N is a positive integer greater than 1. The SIM card interface 195 may support a nano-SIM card, a micro-SIM card, a SIM card, and the like.

Methods in the following embodiments may all be implemented in the display device 100 having the foregoing hardware structure.

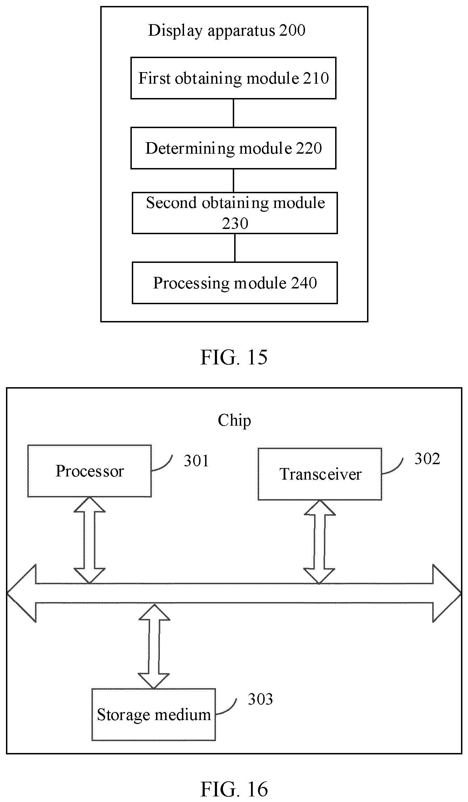

FIG. 15 is a schematic diagram of a structure of a display apparatus according to an embodiment of this application. As shown in FIG. 15, the display apparatus 200 includes a first obtaining module 210, a determining module 220, a second obtaining module 230, and a processing module 240.

The display apparatus 200 may implement the following solutions:

the first obtaining module 210 is configured to obtain a decoded video of an original video;
the determining module 220 is configured to determine luminance information corresponding to each video frame image;
the second obtaining module 230 is configured to: obtain a brightness capability of the display device and a dynamic range of the original video, and calculate an extensible dynamic range of each video frame image based on the brightness capability of the display device and the dynamic range of the original video; and
the processing module 240 is configured to perform tone mapping on each video frame image by using the luminance information corresponding to each video frame image and the extensible dynamic range of each video frame image, to obtain an enhanced image corresponding to each video frame image.

It should be noted that, the display apparatus 200 is represented in a form of a functional module. The term "module" herein may be implemented in the form of software and/or hardware, which is not specifically limited.

For example, the "module" may be a software program, a hardware circuit, or a combination of the two that implement the above functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions.

Therefore, units of various examples described in the embodiments of this application may be realized by electronic hardware, or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

An embodiment of this application further provides a computer-readable storage medium, where the computer-readable storage medium stores computer instructions; and when the computer-readable storage medium is run on a display device, the display device is enabled to perform the method as described above. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium, or a semiconductor medium (for example, a solid state disk (solid state disk, SSD)), or the like.

An embodiment of this application further provides a computer program product including instructions, and the computer program product includes: computer program code, where the computer program code, when runs on a display device, enables the display device to perform the technical solution as described above.

FIG. 16 is a schematic diagram of a structure of a chip according to an embodiment of this application. The chip shown in FIG. 16 may be a general-purpose processor and may also be a special-purpose processor. The chip includes a processor 301. The processor 301 is configured to support the display device in executing the previous technical solution.

Optionally, the chip further includes a transceiver 302, and the transceiver 302 is configured to be controlled by the processor 301, to support the display apparatus in executing the previous technical solution.

Optionally, the chip shown in FIG. 16 may further include a storage medium 303.

It should be noted that, the chip shown in FIG. 16 may be implemented by using the following circuits or components: one or more field programmable gate arrays (field programmable gate array, FPGA), a programmable logic device (programmable logic device, PLD), a controller, a state machine, a gate logic, a discrete hardware part, any other proper circuits, or any combination of circuits capable of executing various functions described in this whole application.

The display device, the display apparatus, the computer storage medium, the computer program product, and the chip provided in the embodiments of this application are all configured to execute the method provided above. Therefore, for beneficial effects that can be achieved, refer to the beneficial effects corresponding to the method provided above. Details are not described herein again.

It can be understood that the foregoing descriptions are intended to help a person skilled in the art to better understand the embodiments of this application, but not to limit the scope of the embodiments of this application. People skilled in the art obviously may perform various equivalent modifications or changes according to the given examples, for example, some steps in various embodiments of a detection method may be unnecessary or some steps may be newly added. Or any two or more above embodiments may be combined. A modified, changed or combined scheme may also fall within the scope of the embodiment of this application.

It can be further understood that the foregoing descriptions of the embodiments of this application emphasize differences between the embodiments. For the same or similar description not mentioned, refer to each other. For brevity, details are not described in this specification.

It can be further understood that sequence numbers of the foregoing processes do not indicate an execution sequence, and an execution sequence of processes shall be determined based on functions and internal logic thereof, and shall constitute no limitation on an implementation process of the embodiments of this application.

It can be further understood that in the embodiments of this application, "preset" and "pre-define" may be realized by prestoring corresponding codes and tables in the device (such as the display device) or through other manners used for indicating related information. A specific implementation is not limited in this application.

It can be further understood that division of manners, situations, categories and embodiments in the embodiment of this application merely aims to facilitate description rather than constitute specific limitations, and characteristics in various manners, categories, situations and embodiments may be combined without contradictions.

It can be further understood that in the embodiments of this application, unless otherwise specified and there is a logical conflict, terms and/or descriptions in different embodiments are consistent and may be referenced by each other. Technical features in different embodiments may be combined based on an internal logical relationship thereof to form a new embodiment. Finally, it should be noted that, the foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A video processing method, applied to a display device, wherein the method comprises:

    obtaining a decoded video of an original video, wherein the decoded video comprises a plurality of video frame images;
    determining luminance information corresponding to each video frame image;
    obtaining a brightness capability of the display device and a dynamic range of the original video, and calculating an extensible dynamic range of each video frame image based on the brightness capability of the display device and the dynamic range of the original video; and
    performing tone mapping on each video frame image by using the luminance information corresponding to each video frame image and the extensible dynamic range of each video frame image, to obtain an enhanced image corresponding to each video frame image, wherein a dynamic range of the enhanced image is greater than the dynamic range of the video frame image.

2. The method according to claim 1, wherein the performing tone mapping on each video frame image by using the luminance information corresponding to each video frame image and the extensible dynamic range of each video frame image, to obtain an enhanced image corresponding to each video frame image comprises:

   determining, by using the luminance information corresponding to each video frame image, a standard dynamic region and an extended dynamic region corresponding to each video frame image, wherein luminance information of a pixel in the standard dynamic region is less than a preset threshold, and luminance information of a pixel in the extended dynamic region is greater than or equal to the preset threshold;
   determining, based on the extensible dynamic range of each video frame image, a first coefficient corresponding to the standard dynamic region of each video frame image and a second coefficient corresponding to the extended dynamic region of each video frame image; and
   performing tone mapping on the pixel in the standard dynamic region based on the first coefficient, and performing tone mapping on the pixel in the extended dynamic region based on the second coefficient, to obtain the enhanced image corresponding to each video frame image.

3. The method according to claim 2, wherein the performing tone mapping on the pixel in the standard dynamic region based on the first coefficient, and performing tone mapping on the pixel in the extended dynamic region based on the second coefficient, to obtain the enhanced image corresponding to each video frame image comprises:

   calculating a first product of an original pixel value of each pixel in the standard dynamic region and the first coefficient, and updating a pixel value of each pixel in the standard dynamic region based on the first product;
   calculating a second product of an original pixel value of each pixel in the extended dynamic region and the second coefficient, and updating a pixel value of each pixel in the extended dynamic region based on the second product; and
   generating, based on each updated pixel in the standard dynamic region and each updated pixel in the extended dynamic region, the enhanced image corresponding to each video frame image.

4. The method according to claim 1, wherein the performing tone mapping on each video frame image by using the luminance information corresponding to each video frame image and the extensible dynamic range of each video frame image, to obtain an enhanced image corresponding to each video frame image comprises:

   determining, by using the luminance information corresponding to each video frame image, a low gray scale region, a medium gray scale region, and a high gray scale region corresponding to each video frame image; and
   adjusting, based on the extensible dynamic range of each video frame image, luminance of at least one of the low gray scale region, the medium gray scale region, and the high gray scale region, to obtain the enhanced image corresponding to each video frame image.

5. The method according to claim 4, wherein the adjusting, based on the extensible dynamic range of each video frame image, luminance of at least one of the low gray scale region, the medium gray scale region, and the high gray scale region, to obtain the enhanced image corresponding to each video frame image comprises:

   based on the extensible dynamic range of each video frame image, determining an adjusted gray scale value of a pixel in the low gray scale region;
   determining an adjusted gray scale value of a pixel in the medium gray scale region;
   determining an adjusted gray scale value of a pixel in the high gray scale region; and
   generating the enhanced image corresponding to each video frame image based on the adjusted gray scale value of each pixel in the low gray scale region, the medium gray scale region, and the high gray scale region.

6. The method according to claim 5, wherein based on the extensible dynamic range of each video frame image, the determining an adjusted gray scale value of a pixel in the low gray scale region comprises:
   determining, based on the extensible dynamic range of each video frame image, a third coefficient corresponding to the low gray scale region; and performing tone mapping on the pixel in the low gray scale region based on the third coefficient, to obtain the adjusted gray scale value of the pixel in the low gray scale region.

7. A display apparatus, wherein the display apparatus comprises units configured to perform the method according to any one of claims 1 to 6.

8. A display device, comprising: one or more processors; and one or more memories, wherein the memory stores one or more programs, and when executed by the processor, the one or more programs enable the display device to perform the method according to any one of claims 1 to 6.

9.  A chip, comprising: a processor, configured to invoke, from a memory, and run a computer program, to enable a display device equipped with the chip to perform the method according to any one of claims 1 to 6.

10. A computer-readable storage medium, wherein the computer-readable storage medium stores a computer program, and the computer program, when executed by a processor, enables the processor to perform the method according to any one of claims 1 to 6.

FIG. 1

FIG. 2

FIG. 3

**FIG. 4**

| |
|---|
| Obtain a decoded video of an original video — S101 |

| |
|---|
| Determine luminance information corresponding to each video frame image — S102 |

| |
|---|
| Obtain a brightness capability of a display device and a dynamic range of the original video and calculate an extensible dynamic range of each video frame image based on the brightness capability of the display device and the dynamic range of the original video — S103 |

| |
|---|
| Perform tone mapping on each video frame image by using the luminance information corresponding to each video frame image and the extensible dynamic range of each video frame image, to obtain an enhanced image corresponding to each video frame image — S104 |

**FIG. 5**

FIG. 6

FIG. 7

| Determine a standard dynamic region and an extended dynamic region corresponding to each video frame image by using the luminance information corresponding to each video frame image | S1041 |

| Determine a first dynamic coefficient corresponding to the standard dynamic region and a second dynamic coefficient corresponding to the extended dynamic region | S1042 |

| Generate the enhanced image corresponding to each video frame image based on the standard dynamic region, the first dynamic coefficient, the extended dynamic region, and the second dynamic coefficient of each video frame image | S1043 |

FIG. 8

Determine, by using the luminance information corresponding to each video frame image, a first region, a second region, and a third region corresponding to each video frame image — S1044

Determine a first adjustment policy corresponding to the first region, a second adjustment policy corresponding to the second region, and a third adjustment policy corresponding to the third region — S1045

Generate the enhanced image corresponding to each video frame image based on the first region, the first adjustment policy, the second region, the second adjustment policy, the third region, and the third adjustment policy of each video frame image — S1046

FIG. 9

FIG. 10

FIG. 11

FIG. 12

FIG. 13

Electronic device
100

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Display 1-N [194]

Camera 1-N [193]

Indicator [192]

Motor [191]

Button [190]

Internal memory [121]

SIM card interface 1-N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Proximity light sensor [180G]

Fingerprint sensor [180H]

Temperature sensor [180J]

Touch sensor [180K]

Ambient light sensor [180L]

Bone conduction sensor [180M]

USB port [130]

Charging input

Charging management module [140]

Power management module [141]

Battery [142]

FIG. 14

Display apparatus 200

First obtaining module 210

Determining module 220

Second obtaining module 230

Processing module 240

FIG. 15

Chip

Processor 301

Transceiver 302

Storage medium 303

FIG. 16

# INTERNATIONAL SEARCH REPORT

| International application No. |
|---|
| **PCT/CN2023/116769** |

| A. | CLASSIFICATION OF SUBJECT MATTER |
|---|---|
| | H04N 5/57(2006.01)i |

According to International Patent Classification (IPC) or to both national classification and IPC

| B. | FIELDS SEARCHED |
|---|---|

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 视频, 帧, 显示设备, 显示屏, 屏幕, 亮度, 显示, 能力, 信息, 参数, 动态范围, 扩展, 色调映射, 图像, 增强, video, frame, display device, display screen, screen, brightness, display, capability, information, parameter+, range, dynamic range, extension, tone mapping, image, enhanc+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106791865 A (HANGZHOU DANGHONG TECHNOLOGY CO., LTD.) 31 May 2017 (2017-05-31)<br>description, paragraphs [0002]-[0027] | 1, 7-10 |
| X | CN 114501023 A (SHENZHEN SIMOU INFORMATION TECHNOLOGY CO., LTD. et al.) 13 May 2022 (2022-05-13)<br>description, paragraphs [0002]-[0090] | 1, 7-10 |
| A | CN 111311524 A (UNIVERSITY OF ELECTRONIC SCIENCE AND TECHNOLOGY OF CHINA) 19 June 2020 (2020-06-19)<br>entire document | 1-10 |
| A | CN 113099201 A (BEIJING QIYI CENTURY SCIENCE & TECHNOLOGY CO., LTD.) 09 July 2021 (2021-07-09)<br>entire document | 1-10 |
| A | US 2018048845 A1 (PANASONIC INTELLECTUAL PROPERTY CORPORATION OF AMERICA) 15 February 2018 (2018-02-15)<br>entire document | 1-10 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 November 2023** | **24 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/116769** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2020134792 A1 (MICROSOFT TECHNOLOGY LICENSING LLC.) 30 April 2020 (2020-04-30)<br>entire document | 1-10 |

Form PCT/ISA/210 (second sheet) (July 2022)

**INTERNATIONAL SEARCH REPORT**
Information on patent family members

International application No.

**PCT/CN2023/116769**

| Patent document cited in search report | | | Publication date (day/month/year) | Patent family member(s) | | | Publication date (day/month/year) |
|---|---|---|---|---|---|---|---|
| CN | 106791865 | A | 31 May 2017 | None | | | |
| CN | 114501023 | A | 13 May 2022 | None | | | |
| CN | 111311524 | A | 19 June 2020 | None | | | |
| CN | 113099201 | A | 09 July 2021 | None | | | |
| US | 2018048845 | A1 | 15 February 2018 | US | 10462407 | B2 | 29 October 2019 |
| US | 2020134792 | A1 | 30 April 2020 | US | 10957024 | B2 | 23 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211585804